(19) Europäisches Patentamt

European Patent Office

Office européen des brevets

(11) **EP 1 414 312 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(21) Anmeldenummer: 02727550.2

(22) Anmeldetag: **10.04.2002**

(51) Int Cl.:
*A23L 1/05* *(2006.01)*   *A23L 1/06* *(2006.01)*
*A23L 1/236* *(2006.01)*   *A23L 1/0524* *(2006.01)*
*C08B 37/00* *(2006.01)*

(86) Internationale Anmeldenummer:
**PCT/EP2002/003979**

(87) Internationale Veröffentlichungsnummer:
**WO 2003/009705 (06.02.2003 Gazette 2003/06)**

(54) **GELIERZUCKER UND VERFAHREN ZU DESSEN HERSTELLUNG**

GELLING SUGAR AND METHOD FOR PRODUCING THE SAME

SUCRE DE GELIFICATION ET PROCEDE DE FABRICATION

(84) Benannte Vertragsstaaten:
**AT BE CH CY DE DK ES FI FR GB GR IE IT LI LU MC NL PT SE TR**

(30) Priorität: **25.07.2001 DE 10136260**

(43) Veröffentlichungstag der Anmeldung:
**06.05.2004 Patentblatt 2004/19**

(73) Patentinhaber: **SÜDZUCKER AKTIENGESELLSCHAFT**
**68165 Mannheim (DE)**

(72) Erfinder:
• **KOWALCZYK, Jörg**
**67304 Eisenberg/Steinborn (DE)**
• **KUNZ, Markwart**
**67550 Worms (DE)**
• **RAPP, Knut**
**67591 Offstein (DE)**

(74) Vertreter: **Schrell, Andreas et al**
**Gleiss Grosse Schrell & Partner**
**Patentanwälte Rechtsanwälte**
**Leitzstrasse 45**
**70469 Stuttgart (DE)**

(56) Entgegenhaltungen:
EP-A- 0 867 470          WO-A-00/56176
WO-A-91/15517          DE-A- 2 721 199
DE-A- 2 836 140          DE-A- 4 341 780
DE-A- 19 961 182          US-A- 4 089 981
US-A- 5 939 127

• **EISENBRAND, G. (HRSG.): "Römpp Lexikon Lebensmittelchemie [Pectine] " 1995 , GEORG THIERME VERLAG , STUTTGART, GERMANY XP002211418 ISBN 3-13-736601-1 Seite 634 - Seite 635**

**Beschreibung**

Die Erfindung betrifft Geliermittelzusammensetzungen, enthaltend mindestens ein Süßungsmittel, z.B. einen Zucker, Säure und Geliermittel, deren Verwendung und die daraus herstellbaren Zubereitungen.

Geliermittelzusammensetzungen ("Gelierzucker") werden seit langer Zeit als fertige Mischungen für die Verwendung im Haushalt hergestellt. Aus diesen Mischungen werden Konfitüren, Marmeladen und/oder Gelees hergestellt. In der Regel werden dabei bestimmte Mengen an Früchten, Fruchtauszügen und/oder Fruchtsäften mit Gelierzucker gemischt, wobei im Allgemeinen ein Verhältnis 1:1, 2:1 oder auch 3:1 zwischen den genannten Komponenten und Gelierzucker eingehalten wird. Es sind aber auch andere Kombinationen von Früchten, Fruchtauszügen und/oder Fruchtsäften mit dem Gelierzucker möglich.

Gelierzucker besteht hauptsächlich aus Zucker. Unter dem Begriff Zucker werden in diesem Zusammenhang Oligo-, Disaccharide und Monosaccharide sowie entsprechende weitere Süßungsmittel, allein oder in Kombination miteinander, insbesondere bevorzugt Saccharose, Glucose, Glucosesirup, Fructose, Sorbit verstanden. Gelierzucker können auch andere Sü-ßungsmittel, z.B. Zuckeraustauschstoffe enthalten, wie Isomalt.

In geringen Mengen enthält Gelierzucker als Geliermittel Pektin (amidiert) sowie Citronensäure und gegebenenfalls einen Konservierungsstoff wie beispielsweise Sorbinsäure.

Konfitüren sind wohlschmeckende, gesunde Zubereitungen, die es bereits in früheren Zeiten gestatteten, Früchte in Zeiten, in denen keine frischen Früchte oder auch kein frisches Obst zur Verfügung stand beziehungsweise standen, zu genießen. Für viele Menschen ist deshalb mit dem Begriff "Konfitüre" auch der Begriff Gesundheit assoziiert. Neben dem Geschmack von Speisen und Lebensmitteln stehen heutzutage aber bei vielen Verbrauchern zunehmend ernährungsphysiologische Aspekte im Vordergrund.

Wohlschmeckende Speisen, die neben dem Geschmack auch noch einen gesundheitlichen Zusatznutzen haben, werden bei der zu erwartenden Altersstruktur der Bevölkerung in den Industriestaaten in Zukunft noch an Bedeutung gewinnen. Es ist allgemein bekannt, dass große Teile beziehungsweise Untergruppen der Bevölkerung, beispielsweise Kinder, Senioren, Schwangere und Rekonvaleszenten, unter bestimmten Defiziten in Bezug auf ihre Nahrung leiden. Dies ist nicht nur individuell, sondern auch volkswirtschaftlich ungünstig, da die Vorbeugung von Krankheiten in wirtschaftlicher Hinsicht sinnvoller ist als ihre Behandlung. Akzeptiert werden "gesunde" Lebensmittel aber zumeist nur dann von der Bevölkerung, wenn sie zusätzlich auch gut schmecken, bequem konsumiert und individuell zubereitet werden können.

Kombinationen von Inulin und Pektin zur synergistischen Verbesserung der Gelstärke in Lebensmitteln sind aus EP 0 867 470 A1 bekannt. Dort wird auch auf die prebiotischen Eigenschaften von Inulin hingewiesen.

In der Offenlegungsschrift DE 28 36 140 sind Gelierhilfen zum Gelieren oder Andicken von Nahrungs- und Genussmitteln dargestellt, welche neben den bekannten Geliermittelkomponenten (Pektin / Säure / Zucker) zusätzlich Carrageen und Galaktomannane enthalten.

Aufgabe der Erfindung ist es deshalb, Geliermittelzusammensetzungen bereitzustellen, die den vorstehend genannten Bedürfnissen der Verbraucher Rechnung tragen. Insbesondere sollen die erfindungsgemäßen Geliermittelzusammensetzungen zu Fruchtsoßen, Fruchtgummizuckerwaren, besonders aber zu Konfitüren und anderen Brotaufstrichen verarbeitet werden können, die neben ihrem guten Geschmack auch noch ernährungsphysiologisch wichtige Eigenschaften aufweisen.

Diese Aufgabe wird erfindungsgemäß durch die angegebenen Ansprüche gelöst. Hierbei und auch im weiteren Verlauf der Beschreibung der Erfindung bedeutet die Formulierung "ausgewählt aus der Gruppe, bestehend aus" stets -soweit nicht explizit Anderes geschrieben ist-, dass auch Kombinationen der jeweiligen Bestandteile der Gruppe gemeint sind.

Der Begriff Zucker umfasst in diesem Zusammenhang -wie bereits vorstehend erwähnt- Oligo-, Disaccharide und Monosaccharide sowie entsprechende weitere Süßungsmittel, allein oder in Kombination miteinander, insbesondere bevorzugt Saccharose, Glucose, Glucosesirup, Fructose und Sorbit. Zusätzlich oder an Stelle von Zucker kann als Süßungsmittel jedoch ein Zuckeraustauschstoff, z.B. ein Zuckeralkohol oder ein Zuckeralkoholgemisch, in der erfindungsgemäßen Geliermittelmischung eingesetzt werden.

Dabei sieht die Erfindung in besonders bevorzugter Weise die Verwendung eines äquimolaren Gemischs aus 6-0-$\alpha$-D-Glucopyranosyl-D-sorbit (1,6-GPS) und 1-O-$\alpha$-D-Glucopyranosyl-D-mannit (1,1-GPM), also Isomalt® oder hydrierte Isomaltulose als Süßungsmittel vor.

In einer weiteren bevorzugten Ausführungsform sieht die Erfindung vor, als Süßungsmittel ein in der EP 0 625 578 B1 beschriebenes Süßungsmittelgemisch aus 1,6-GPS, 1,1-GPM und 1-O-$\alpha$-D-Glucopyranosyl-D-sorbit (1,1-GPS) sowie gegebenenfalls Mannit, Sorbit, hydrierter oder nicht-hydrierter Oligosaccharide oder gegebenenfalls vorhandener Restsaccharose zu verwenden.

In erfindungsgemäß besonders vorteilhafter Weise wird ein Süßungsmittel aus 10 bis 50 Gew.-% 1,6-GPS, 2 bis 20 Gew.-% 1,1-GPS und 30 bis 70 Gew.-% 1,1-GPM eingesetzt.

Erfindungsgemäß ist jedoch auch vorgesehen, dass ein Süßungsmittelgemisch aus 5 bis 10 Gew.-% 1,6-GPS, 30 bis 40 Gew.-% 1,1-GPS und 45 bis 60 Gew.-% 1,1-GPM eingesetzt wird (alle Angaben in Gew.-% sind auf den Trockensubstanzgehalt bezogen). Erfindungsgemäß ist es auch vorgesehen, als Süßungsmittel ein 1,6-GPS und/oder ein 1,1-GPM angereichertes Gemisch einzusetzen. Das 1,6-GPS angereicherte Gemisch enthält von 57 Gew.-% : 43 Gew.-% bis 99 Gew.-% : 1 Gew.-% an 1,6-GPS : 1,1-GPM. Ein 1,1-GPM angereichertes Gemisch enthält von 1 Gew.-% : 99 Gew.-% bis 43 Gew.-% : 57 Gew.-% an 1,6-GPS : 1,1-GPM. Derartige Gemische sind aus der DE 195 32 396 C2 bekannt, die in diesem Umfang in den Offenbarungsgehalt der vorliegenden Lehre mit einbezogen ist.

Den bekannten Geliermittelzusammensetzungen werden erfindungsgemäß noch weitere Stoffe, ausgewählt aus der Gruppe der Ballaststoffe, Präbiotika und Resorptionshilfsstoffe hinzugefügt, die dann natürlich auch in den aus den Geliermittelzusammensetzungen hergestellten Zubereitungen enthalten sind.

Unter dem Begriff "Zubereitung" werden in dem vorliegenden Zusammenhang beispielsweise Fruchtsoßen, Fruchtgummizuckerwaren, besonders aber Konfitüren und andere Brotaufstriche verstanden, wobei diese Aufzählung nicht abschließend zu verstehen ist.

Unter dem Begriff "Ballaststoff" werden Ingredienzien von Nahrungsmitteln verstanden, die für den Menschen eigentlich unverdaulich sind, aber durch mechanische Reizung der Darmwände die Peristaltik und damit auch die Magen-Darmpassage der Nahrung beschleunigen. Wegen ihrer sehr wichtigen Funktion werden Ballaststoffe in der Allgemeinheit als "gesund" angesehen.

Unter den hier verwendeten Begriffen "Präbiotikum" beziehungsweise "präbiotisch" werden nicht verdauliche Stoffe verstanden, die das Wachstum und die Aktivität von Mikroorganismen im Verdauungtrakt beeinflussen, und so positiv auf den Organismus wirken; mögliche Präbiotika sind:

- nicht verdaubare Kohlenhydrate, zum Beispiel Fructooligosaccharide (Inulin aus Chicorée), Lactulose, Zuckeralkohole und Oligosaccharide mit Xylose, Mannose, Galactose, Maltose und Mannose

- nicht verdaubare Proteine und Peptide: sie fördern die Aufnahme von Calcium und Eisen und stimulieren des Weiteren das Immunsystem

- nicht verdauliche Lipide (Fette)

[Quelle: Praxishandbuch Functional Food, Grundwerk 12/99; II Recht]

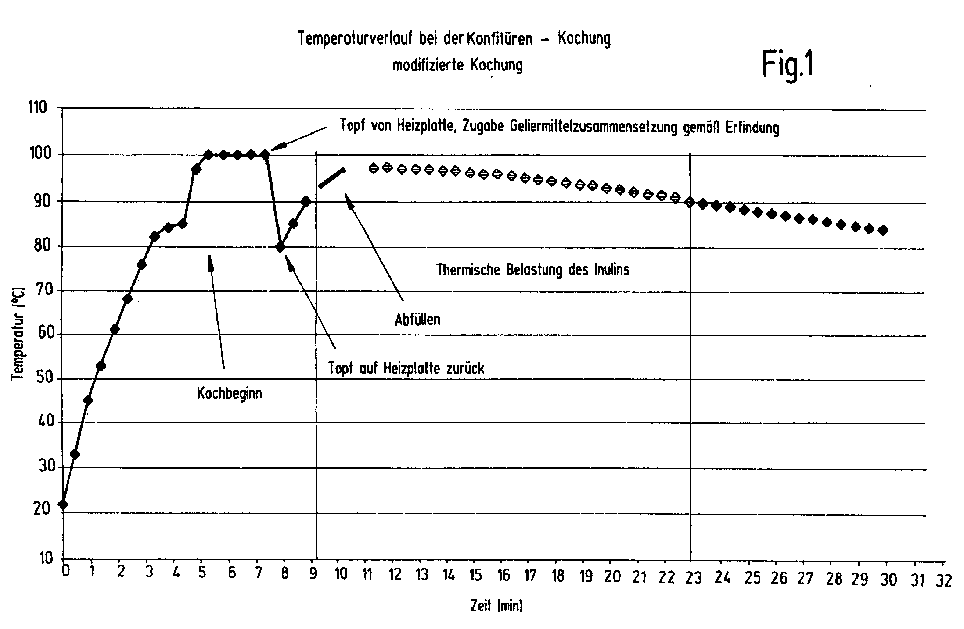

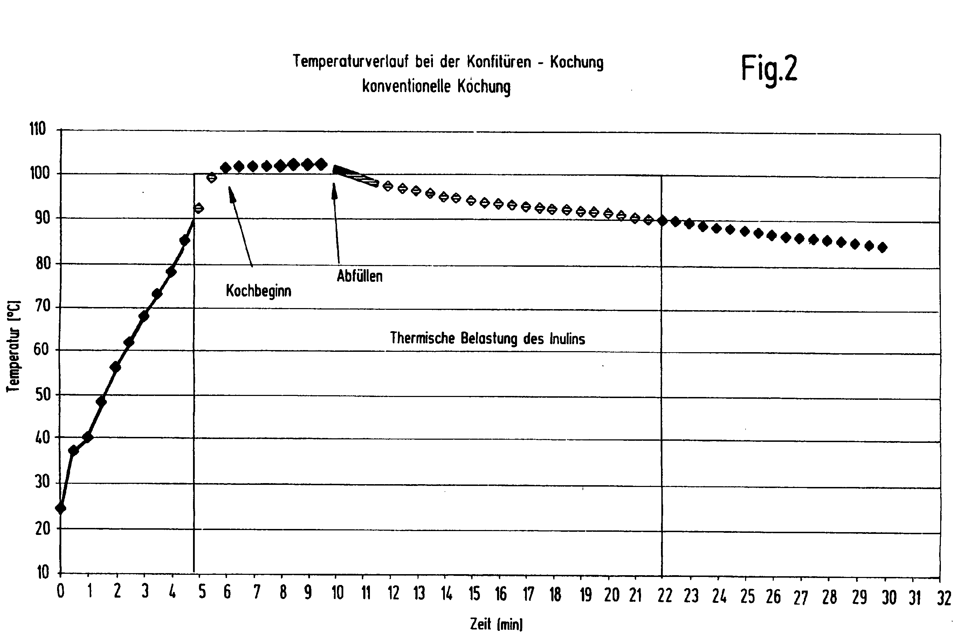

Die Eigenschaften der erfindungsgemäßen Geliermittelzusammensetzungen beziehungsweise ihre Verwendung werden durch die beigefügte Zeichnung mit den Figuren 1 und 2 näher erläutert.

Fig. 1 zeigt den Temperaturverlauf bei dem erfindungsgemäßen Verfahren zur Herstellung einer Konfitüre.

Fig. 2 zeigt den Temperaturverlauf bei einem üblichen Verfahren gemäß dem Stand der Technik zur Herstellung einer Konfitüre.

Wie man den Fig. 1 und 2 entnehmen kann, führt die Durchführung des erfindungsgemäßen Verfahrens zur Herstellung einer Zubereitung (Konfitüre) zu einer kürzeren thermischen Belastung von Inulin, da die Zeitdauer des Erhitzens mit einer Temperatur von mehr als 90 °C und auch der absolute Wert der Maximaltemperatur verringert sind.

Die erfindungsgemäß bereitgestellten Geliermittelzusammensetzungen enthalten als weiteren Bestandteil Stoffe, die die Resorption der Nahrung erleichtern, das heißt, dass es sich hier um Resorptionshilfsstoffe handelt.

Den erfindungsgemäßen Geliermittelzusammensetzungen werden also Ballaststoffe, Präbiotika und/oder Resorptionshilfsstoffe hinzugefügt. In vielen Fällen werden diese Stoffe chemisch-strukturell voneinander verschieden sein.

Die erfindungsgemäßen Geliermittelzusammensetzungen sind insbesondere dadurch gekennzeichnet, dass das Präbiotikum in einer Menge von 1 g bis 200 g je 500 g der Geliermittelzusammensetzung enthalten ist; der Ballaststoff ist bevorzugt in einer Menge von 1 g bis 150 g je 500 g der Geliermittelzusammensetzung enthalten und im Falle, dass der mindestens eine weitere Stoff ein Resorptionshilfsstoff, bevorzugt ein Resorptionshilfsstoff für Ca- und/oder Mg-Ionen ist, ist dieser Resorptionshilfsstoff in einer Menge von 1 g bis 200 g je 500 g der Geliermittelzusammensetzung enthalten.

Bei den Präbiotika handelt es sich insbesondere um Stoffe, die ausgewählt sind aus der Gruppe, bestehend aus Pektinhydrolyseprodukten und Galacto-Manno-Oligosacchariden.

Die Pektinhydrolyseprodukte sind insbesondere erhältlich, indem ein Pektin oder ein pektinhaltiges pflanzliches Material in wässriger Lösung oder Suspension in einem ersten Verfahrensschritt mit einem pektinhydrolysierenden Enzym A und in einem zweiten Verfahrensschritt mit einem pektinhydrolysierenden Enzym B behandelt wird, wobei Pektinhydrolyseprodukte mit einem Anteil an Galakturoniden erhalten werden, die zumindest ein 4,5-ungesättigtes Galakturonsäuremolekül enthalten und mit Methanol zu ≥20 % verestert sind. Bei dem verwendeten Enzym A kann es sich zum Beispiel um eine Pektinlyase (EC 4.2.2.10) oder eine Endopolygalakturonase (EC 3.2.1.15), bevorzugt jedoch um eine Pektinlyase handeln. Bei dem verwendeten Enzym B kann es sich um eine Endopolygalakturonase oder eine Pektinlyase, bevorzugt jedoch um eine Endopolygalakturonase handeln. Des Weiteren können die nach dem zweiten Verfahrensschritt erhaltenen flüssigen Hydrolyseprodukte in einem dritten Verfahrensschritt mit einem Enzym C behandelt werden, wobei es sich bei dem Enzym C bevorzugt um eine Pektinesterase (EC 3.1.1.11) handelt.

Bei dem in dem vorstehend erwähnten Verfahren eingesetzten Pektin handelt es sich vorzugsweise um Citruspektin, Apfelpektin oder Zuckerrübenpektin. Auch Mischungen derartiger Pektine können verwendet werden. Als pektinhaltige Materialien können auch Zuckerrübenschnitzel, Apfeltrester oder getrocknete Rückstände aus der Orangensaft-, Zitronensaft- und/oder Limonensaft-Herstellung verwendet werden.

Ein weiteres bevorzugt in der erfindungsgemäßen Geliermittelzusammensetzung enthaltenes Präbiotikum beziehungsweise weitere in der erfindungsgemäßen Geliermittelzusammensetzung enthaltene Präbiotika sind Galacto-Manno-Oligosaccharide. Derartige Galacto-Manno-Oligosaccharide weisen $\beta$-1,4-verknüpfte Mannoseeinheiten und daran $\alpha$-1,6-verknüpfte Galactoseeinheiten auf und sie haben einen Polymerisationsgrad (DP) von < 15, insbesondere 2 bis 7.

Die Galacto-Manno-Oligosaccharide mit $\beta$-1,4-verknüpften Mannoseeinheiten und daran $\alpha$-1,6-verknüpften Galactoseeinheiten sind insbesondere dadurch erhältlich, dass eine wässrige Lösung oder Suspension aus Guargum hergestellt, unter Einsatz eines aus Bakterien stammenden enzymatisch wirkenden Agens hydrolysiert und eine wässrige Lösung eines Gemischs mit Mannose- und Galactose-haltigen Oligosacchariden mit einem Polymerisationsgrad (DP) < 15, insbesondere 2 bis 7, erhalten wird.

Ein derartiges Verfahren und die damit erhältlichen Galacto-Manno-Oligosaccharide sind in der deutschen Patentanmeldung 199 61 182.3 der Südzucker AG Mannheim/Ochsenfurt ausführlich beschrieben, weshalb der gesamte Inhalt, das heißt sowohl der das Verfahren betreffende als auch der die Galacto-Manno-Oligosaccharide, also die Stoffe als solche betreffende Offenbarungsgehalt dieser Patentanmeldung ausdrücklich an dieser Stelle miteinbezogen wird.

In einem bevorzugten Fall werden den erfindungsgemäß bereitgestellten Geliermittelzusammensetzungen jedoch Stoffe beigefügt sein, die in der Lage sind, sowohl als Ballaststoff als auch als Präbiotikum und/oder Resorptionshilfsstoff zu wirken.

Als Ballaststoff, Präbiotikum oder Resorptionshilfsmittel enthalten die erfindungsgemäßen Geliermittelzusammensetzungen bevorzugt Inulo-Oligo- und/oder Inulo-Polysaccharide, insbesondere jedoch Oligofructose und/oder Inulin, bevorzugt in einer Menge von 15 bis 150 g je 500 g der Zusammensetzung.

Die Möglichkeiten der Auslobung von Inulin beziehungsweise Oligofructose hängt in folgender Weise von der Menge im Endprodukt (Konfitüre) ab:

<u>Ballaststoffwirkung</u>: 8 g Inulin (Raftilose) oder Oligofructose (Raftilose) pro Tag,

<u>Präbiotische Wirkung</u>: 8 g Inulin beziehungsweise 5 g Oligofructose pro Tag,

<u>Verbesserte Ca-Resorption</u>: 40 g Inulin beziehungsweise 15 g Oligofructose beziehungsweise 8 g RaftiloseSynergy® jeweils pro Tag.

Bei der präbiotischen und Calcium-Resorptionswirkung sollen die angegebenen Mengen in einer (1) Portion enthalten sein.

Man kann davon ausgehen, dass ca. 25 % dieser Mengen in einer Portion enthalten sein sollten, um werbewirksam als Ballaststoff ausgelobt, also dargestellt werden zu können. Es wurden 25 g (Einzelpackungen im Hotel) als 1 Konfitürenportion festgelegt. 2 g Inulin je Portion in 55 Portionen erfordern damit 110 g Inulin in 500 g Geliermittelmischung, da ein Paket (=500 g, =1 Kochung) die Konfitürenmenge für 55 Portionen ergibt.

Wie vorstehend bereits erwähnt, enthalten die erfindungsgemäßen Geliermittelzusammensetzungen zur Lösung der Aufgabe auch noch weitere Stoffe als Resorptionshilfsstoffe. Bevorzugt werden Inulo-Oligo- und/oder Inulo-Polysaccharide, insbesondere Oligofructose und/oder Inulin als Resorptionshilfsstoffe in die erfindungsgemäßen Geliermittelzusammensetzungen untergemischt. Das Inulin selber entfaltet zusätzlich beziehungsweise in Ergänzung seiner Ballaststoffwirkungen und seiner präbiotischen Eigenschaften die eines Resorptionshilfsstoffs. Diesbezüglich gibt es Untersuchungen, die belegen, dass Inulin- und/oder Oligofructose-Bestandteile die Aufnahme beziehungsweise Resorption von Calcium- und/oder Magnesiumionen im Körper deutlich verbessern.

In einer bevorzugten Ausführungsform der erfindungsgemäßen Geliermittelzusammensetzungen können deshalb auch Magnesiumsalze, insbesondere Magnesiumcarbonat, bevorzugt in einer Menge von 1 g bis 10 g je 500 g der Zusammensetzung hinzugefügt sein, da Magnesiumionen physiologisch wertvoll sind und eine Unterversorgung mit Magnesium in Teilen der Bevölkerung, insbesondere bei den vorstehend erwähnten Risikogruppen (Kinder, Senioren, Schwangere und Rekonvaleszenten) besteht. Ein weiterer Vorteil der erfindungsgemäßen Zugabe von Magnesium zu den Geliermittelzusammensetzungen ist, dass der relative Magnesiumanteil im Magnesiumcarbonat hoch ist und die größeren Mengen an Magnesium im Gegensatz zum Calcium den Geliermechanismus bei bestimmungsgemäßer Verwendung der erfindungsgemäßen Geliermittelzusammensetzungen nicht beeinträchtigen.

Ein weiterer Vorteil der Zugabe von Magnesiumcarbonat zu der bevorzugten Ausführungsform der erfindungsgemäßen Geliermittelzusammensetzung besteht darin, dass das in Gegenwart der Citronensäure sich dann bildende Puffersystem Citronensäure/Magnesiumcitrat es gestattet, den pH-Wert der unter Zugabe der erfindungsgemäßen Geliermittelzusammensetzung hergestellten Zubereitung in dem für derartige Zubereitungen relevanten, relativ engen Bereich zu halten und damit als Stabilisator insbesondere für Inulin zu wirken. Im Übrigen sollte der pH-Wert bei der Herstellung einer Zubereitung auf der Grundlage von Erdbeeren aus geschmacklichen Gründen den Wert von ca. 3,4 nicht überschreiten, bei einer Zubereitung, hier Konfitüre, mit sauren Beeren (Johannisbeeren) liegt er etwa 0,4 Einheiten tiefer.

Die Erfindung sieht daher in einer bevorzugten Ausführungsform die Verwendung eines Puffersystems in der erfindungsgemäßen Geliermittelmischung vor, insbesondere um das Inulin vor Hydrolyse zu schützen. Dieses Puffersystem kann das vorstehende Citronensäure/Magnesiumcitrat-System sein. In bevorzugter Ausführung wird als Puffersystem ein Citronensäure/Natriumcitrat-System eingesetzt.

Eine weitere bevorzugte Ausführungsform der erfindungsgemäßen Geliermittelzusammensetzungen wird durch Zugabe von Citronensäure verwirklicht. Da die erfindungsgemäßen Geliermittelzusammensetzungen in diesem besonders bevorzugten Falle als weiteren Bestandteil zusätzlich Citronensäure, insbesondere in einer Menge von 1 g bis 50 g je 500 g der Zusammensetzung enthalten, kommt es, wenn die Mischung außerdem noch -wie vorstehend erwähnt- Magnesiumcarbonat enthält, zur Entwicklung von $CO_2$. Ist die Citronensäure noch zusätzlich mit einem fetthaltigen Überzug versehen, wie es etwa insbesondere durch "Coating" mit gehärteten pflanzlichen Fetten erfolgt, so hat sie zusätzlich zur Verwendung als Säuerungsmittel noch eine schaumdämpfende Wirkung.

Das $CO_2$ führt zum Dispergieren des in den erfindungsgemäßen Geliermittelzusammensetzungen außerdem noch vorhandenen Geliermittels, das insbesondere in einer Menge von 1 g bis 50 g je 500 g der Geliermittelzusammensetzung hinzugegeben ist. Ein bevorzugt eingesetztes Geliermittel ist (amidiertes) Pektin. Durch die Entwicklung von $CO_2$ ergibt sich bei Verwendung der erfindungsgemäßen Geliermittelzusammensetzungen zur Herstellung von Konfitüren etc. der weitere Vorteil, dass sich das Lösen des Geliermittels, insbesondere des Pektins, einfacher gestaltet, außerdem verdrängt das $CO_2$ die in dem mittels der erfindungsgemäßen Geliermittelzusammensetzung hergestellten Endprodukt eventuell vorhandene Luft, die wegen des Sauerstoffgehalts einen negativen Einfluss auf empfindliche Farb- und Aromastoffe der Früchte hat.

In einer weiteren bevorzugten Ausführungsform der erfindungsgemäßen Geliermittelzusammensetzung wird Natriumcitrat, insbesondere tri-Natriumcitrat-Dihydrat, bevorzugt in einer Menge von 1 g bis 10 g je 500 g der Zusammensetzung hinzugefügt. Durch die direkte Verwendung dieses Citratsalzes, das insbesondere als Puffer wirkt, wird im Gegensatz zur Verwendung des Magnesiumcarbonates weniger Citronensäure gebraucht.

In einer bevorzugten Ausführungsform liegt das erfindungsgemäß verwendete Geliermittel Pektin in mit einem Hüllstoff, vorzugsweise einem Disaccharidalkohol-Gemisch besprühter Form vor.

Die ballaststoffreichen und/oder resorptionsmittelhaltigen und/oder präbiotisch wirkende Stoffe enthaltenden Geliermittelzusammensetzungen gemäß der Erfindung werden erfindungsgemäß dazu verwendet, Zubereitungen, insbesondere Konfitüre herzustellen, welche die vorstehend erwähnten erfindungsgemäßen Geliermittelzusammensetzungen bevorzugt in einem auf das Gewicht bezogenen Mischungsverhältnis von Geliermittelzusammensetzungen zu einem Bestandteil, der ausgewählt ist aus Früchten, Fruchtauszügen und Fruchtsäften, im Bereich von 1:0,5 bis 1:5, stärker bevorzugt in einem Mischungsverhältnis von 1:1,5 bis 1:2,5, besonders bevorzugt 1:2 enthalten. Weitere Anwendungen der erfindungsgemäßen Geliermittelzusammensetzungen sind Fruchtsoßen oder Gummiwaren ("Gummibärchen ohne Gelatine").

Wahlweise kann die erfindungsgemäße Geliermittelzusammensetzung auch noch Konservierungsstoffe enthalten, insbesondere Sorbinsäure. Erfindungsgemäß liegt der Gehalt an einem Konservierungsstoff jedoch möglichst am unteren Bereich, insbesondere nicht oberhalb von 1 g je 500 g Geliermittelmischung.

Zur weiteren Verbesserung der gesundheitlich positiven Wirkungen der erfindungsgemäßen Geliermittelzusammensetzungen können diese zusätzlich noch mindestens einen Bestandteil enthalten, der ausgewählt ist aus der Gruppe, bestehend aus lipophilen Substanzen, Vitaminen, sekundären Pflanzeninhaltsstoffen wie Polyphenolen, Immunstimulantien, Konservierungsstoffen und Gefäßprophylaktika. Weitere mögliche Bestandteile sind Vitamine, Antioxidantien, Grüntee-Extrakt beziehungsweise EGCG, Echinacea, Lycopin, L-Carnitin und Acetyl-L-Carnitin oder ein Salz dieser beiden und andere gesundheitsfördernde pflanzliche Stoffe. Diese Stoffe werden in den üblichen Konzentrationen eingesetzt.

Zu den lipophilen Substanzen, die ganz besonders bevorzugt in den erfindungsgemäßen Geliermittelzusammensetzungen enthalten sind, gehören vorzugsweise Vitamin E und/oder ω-3-Fettsäuren. Q-3-Fettsäuren und/oder Vitamin E wirken in der erfindungsgemäßen Geliermittelzusammensetzung insbesondere auch als schaumverhindernde Substanzen. Zu den zuletzt erwähnten, besonders bevorzugten Fettsäuren, die in Pflanzen und Meeresfischen vorkommen und bei denen es sich um langkettige mehrfach ungesättigte Fettsäuren handelt, gehören die Eicosapentaensäure (EPA, $C_{19}H_{29}COOH$) und die Docosahexaensäure (DHA, $C_{21}H_{31}COOH$). Diese langkettigen, mehrfach ungesättigten Fettsäuren werden bevorzugt in einer Konzentration von 1 bis 10 g je 500 g Geliermittelmischung eingesetzt.

Wie erwähnt, werden mit Hilfe der erfindungsgemäßen Geliermittelzusammensetzungen Zubereitungen, insbesondere Konfitüren, hergestellt. Derartige Zubereitungen werden hergestellt, indem die erfindungsgemäßen Geliermittelzusammensetzungen mit Früchten, Fruchtauszügen und/oder Fruchtsäften in den bereits erwähnten Verhältnissen zusammengemischt werden.

Bei der Herstellung der erfindungsgemäßen Zubereitungen ist es ganz besonders wichtig, dass zur Schonung der in den Früchten beziehungsweise in Fruchtsäften und Ähnlichem enthaltenen Naturstoffe eine bestimmte Reihenfolge der Zugabe der Bestandteile aus den erfindungsgemäßen Geliermittelzusammensetzungen eingehalten wird. Da außerdem das in den Geliermittelzusammensetzungen enthaltene Inulin noch zusätzlich säureempfindlich ist, sollte bei der Herstellung der Zubereitungen beziehungsweise Konfitüren am Anfang in einem sauren Medium nur kurz erhitzt werden. Deshalb ist es besonders bevorzugt, wenn in der erfindungsgemäßen Geliermittelzusammensetzung die Säurebestandteile und die übrigen Geliermittelzusammensetzungsbestandteile (Geliermittel, lipophile Substanzen, Konservierungsstoffe etc.) physikalisch nicht homogen verteilt sind. Die erfindungsgemäße Geliermittelzusammensetzung sollte vielmehr in einer Packung in der oberen Hälfte der Packung in der Weise vorliegen, dass sich dort nichts beziehungsweise nur sehr wenig an saurem Bestandteil befindet. Dadurch wird erzielt, dass bei der Zugabe der Geliermittelzusammensetzung zu den Früchten und so weiter unter Erhitzen das erfindungsgemäß in der Geliermittelzusammensetzung vorhandene Geliermittel Pektin, vorzugsweise zuerst zusammen mit dem Ballaststoff, beispielsweise Inulin zugegeben und aufgelöst wird. Durch den Vorgang des schnellen Lösens wird überdies verhindert, dass der Bestandteil Inulin in zu großem Umfange hydrolysiert wird.

Wird dann in einem zweiten Schritt oder weiteren Schritten der Rest des Packungsinhalts der erfindungsgemäßen Geliermittelzusammensetzung zu den Früchten und so weiter gegeben, so führt der Gehalt des Restes der Packung mit der Hauptmenge an Citronensäure dazu, dass die Bedingungen für den Geliervorgang hergestellt werden und gleichzeitig durch das spätere Zugeben der Hauptmenge an Säuren hydrolyseempfindliche Bestandteile, wie insbesondere Inulin, geschont werden. Erfindungsgemäß kann also das erfindungsgemäße Verfahren so gesteuert werden, dass der Hydrolysegrad der hydrolyseempfindlichen Bestandteile eingeschränkt bleibt. Dieser Hydrolysegrad, bestimmt aus der Differenz von Saccharose + Inulin (aus Geliermittelzusammensetzung) und der in der Konfitüre gefundenen Menge an Sacchariden (Fructose + Glucose + Saccharose), abzüglich des Literaturwerts der verwendeten Früchte für diese Saccharide kann mittels Routinemethoden einfach und schnell gemessen werden.

Das erfindungsgemäße Verfahren zur Herstellung einer Zubereitung, insbesondere einer Konfitüre umfasst also die Schritte, dass die Geliermittelzusammensetzung einem Bestandteil, ausgewählt aus Früchten, Fruchtauszügen und Fruchtsäften, so zugegeben wird, dass in einem ersten Schritt mindestens die Hälfte, bevorzugt mindestens 90 Gew.-%, des in der Geliermittelzusammensetzung insgesamt vorhandenen Geliermittels zusammen mit jeweils der Hälfte der übrigen Bestandteile der Geliermittelzusammensetzung, die Säure ausgenommen, hinzugefügt und dass in einem zweiten Schritt der Rest der Geliermittelzusammensetzung mit mindestens der Hälfte, bevorzugt mit mindestens 90 Gew.-%, der insgesamt in der Geliermittelzusammensetzung vorhandenen Säure und mit der jeweils anderen Hälfte der übrigen Bestandteile der Geliermittelzusammensetzung, das Geliermittel ausgenommen, hinzugefügt wird.

Bei Durchführung des erfindungsgemäßen Verfahrens sollte äußerst bevorzugt auf eine gute Durchmischung des Inhalts im Behälter, üblicherweise im Kochtopf, der zur Durchführung des Verfahrens verwendet wird, durch intensives Rühren mit einer geeigneten Vorrichtung (Rührer, Tellerbesen, Spitzlochlöffel) geachtet werden, damit die Feststoffe (zum Beispiel Pektin, Inulin, Magnesiumcarbonat und/oder Natriumcitrat) in kurzer Zeit in Lösung gehen können.

Im Falle, dass eine Trockensubstanz-verminderte Konfitüre hergestellt werden soll, kann die konservierende Wirkung des in üblicher Konfitüre enthaltenen Zuckers dadurch erzielt werden, dass ein Konservierungsstoff wie zum Beispiel Sorbinsäure zugegeben wird.

Zur Schonung der wertvollen Inhaltsstoffe sollte das hergestellte Erzeugnis, d.h. die Konfitüre, möglichst kühl in einer Kühleinrichtung (Kühlschrank oder Gefrierschrank) aufbewahrt und/oder bald verzehrt werden.

Zur Durchführung dieses Verfahrens wird erfindungsgemäß auch die entsprechende Vorrichtung beziehungsweise Packung bereitgestellt.

Die erfindungsgemäße Vorrichtung/Packung enthält dementsprechend die Menge an den Früchten, Fruchtauszügen und/oder Fruchtsäften zuzugebender Geliermittelzusammensetzung in nicht-homogener Verteilung.

Die nicht-homogene Verteilung der Geliermittelzusammensetzung in der erfindungsgemäßen Vorrichtung kann bevorzugt so ausgestaltet sein, dass bei der Verwendung der Vorrichtung in einem ersten Schritt mindestens die Hälfte, bevorzugt mindestens 90 Gew.-%, des in der Geliermittelzusammensetzung insgesamt vorhandenen Geliermittels zusammen mit jeweils der Hälfte der übrigen Bestandteile der Geliermittelzusammensetzung, die Säure ausgenommen, hinzugefügt und dass in einem zweiten und/oder weiteren Schritten der Rest der Geliermittelzusammensetzung mit mindestens der Hälfte, bevorzugt mit mindestens 90 Gew.-%, der insgesamt in der Geliermittelzusammensetzung vorhandenen Säure und mit der jeweils anderen Hälfte der übrigen Bestandteile der Geliermittelzusammensetzung, das Geliermittel ausgenommen, hinzugefügt wird.

Die nicht-homogene Verteilung der Geliermittelzusammensetzung in der Vorrichtung beziehungsweise Packung kann einerseits beim Befüllen derselben mit der erfindungsgemäßen Geliermittelzusammensetzung auf dem Wege einer gradientenmäßigen Befüllung der Vorrichtung erzielt werden.

Andererseits kann die nicht-homogene Verteilung der Geliermittelzusammensetzung in der erfindungsgemäßen Vorrichtung/Packung durch Aufteilung der in die Vorrichtung zu füllenden Geliermittelzusammensetzung auf mindestens zwei unterschiedlich befüllte Kompartimente erzielt werden. Die Befüllung wird dann so vorgenommen, dass -wie bereits vorstehend erwähnt- bei der bestimmungsgemäßen Verwendung zur Herstellung der Zubereitung in einem ersten Schritt mindestens die Hälfte, bevorzugt mindestens 90 Gew.-%, des in der Geliermittelzusammensetzung insgesamt vorhandenen Geliermittels zusammen mit jeweils der Hälfte der übrigen Bestandteile der Geliermittelzusammensetzung, die Säure ausgenommen, hinzugefügt und dass in einem zweiten Schritt der Rest der Geliermittelzusammensetzung mit mindestens der Hälfte, bevorzugt mit mindestens 90 Gew.-%, der insgesamt in der Geliermittelzusammensetzung vorhandenen Säure und mit der jeweils anderen Hälfte der übrigen Bestandteile der Geliermittelzusammensetzung, das Geliermittel ausgenommen, hinzugefügt wird.

Bei der Herstellung der erfindungsgemäßen Zubereitungen aus den erfindungsgemäßen Geliermittelzusammensetzungen ergibt sich so der Vorteil, dass das weniger gut lösliche Pektin und das hydrolyseempfindliche Inulin beziehungsweise die Oligofructose zunächst aufgelöst werden, wenn die Genusssäure -im vorliegenden Fall Citronensäure- die sich überwiegend im unteren Teil der Verpackung befindet, noch nicht in das heiße Gemisch bei der Herstellung der Zubereitung gelangt ist. Die kurze Erhitzungszeit nach der Zugabe des Restes der Geliermittelzusammensetzung schont die empfindlichen Saccharide. Die heiße Masse kann dann nach Erreichen der Sollkochzeit unmittelbar in (kleine) Gläser abgefüllt werden. Da die so hergestellte Zubereitung erfindungsgemäß einen Gehalt an lipophilen Stoffen, insbesondere Vitamin E und/oder ω-3-Fettsäuren und/oder gehärteten Fetten aufweist, weist die Konfitüre keine (oder nur sehr wenige) Gasblasen auf, die als Quelle für eine unerwünschte mikrobielle Kontamination dienen könnten. Zur optimalen Schonung aller empfindlichen Ingredienzien (Fruchtaromen und Farbstoffe und so weiter) sollte die Lagerung der erfindungsgemäß hergestellten Zubereitungen nicht zu lange bei Raumtemperatur erfolgen, sondern die Zubereitung sollte bei tiefer Temperatur (Kühlschrank oder Tiefkühlschrank) aufbewahrt werden.

Überraschenderweise kann die erfindungsgemäß hergestellte Zubereitung sogar in geeigneter Form eingefroren werden. Beim anschließenden Auftauen ist praktisch keine Synärese zu beobachten, die Zubereitung ist vielmehr in Bezug auf die Farbe und den Geruch nicht von einer frisch hergestellten zu unterscheiden.

Weitere vorteilhafte Ausgestaltungen der erfindungsgemäßen Geliermittelzusammensetzung beziehungsweise der Zubereitungen sind den Unteransprüchen entnehmbar.

Nachfolgend wird die Erfindung unter Bezugnahme auf die Beispiele näher erläutert, die jedoch nicht beschränkend zu verstehen sind.

**Herstellungsbeispiel**

Herstellung einer Geliermittelmischung

Für 1 Packung (500g) [nachfolgend auch abgekürzt mit "Paket"] Geliermittelmischung beziehungsweise - zusammensetzung wurde die nachfolgend aufgeführte Geliermittel-Basismischung aus folgenden Bestandteilen hergestellt:

```
Geliermittel-Basismischung    = Mischung im oberen
                                Teil der Packung
```

| | |
|---|---|
| 310,02 g | Zucker |
| 110,00 g | Inulin |
| 8,00 g | Pektin |
| 3,25 g | Magnesiumcarbonat |
| 1,50 g | Vitamin E (50 %ig) |
| 0,63 g | Sorbinsäure |

Herstellung einer Geliermittelzusammensetzung aus Citronensäure/Geliermittel-Basismischung

11,1 g Citronensäure wurden mit 55,5 g Geliermittel-Basismischung zu 66,6 g Geliermittelzusammensetzung gemischt.

Herstellung einer Packung Geliermittelzusammensetzung

Zuerst wurden in eine 500 g-Verpackung die circa 66,6 g der vorstehend hergestellten Geliermittelzusammensetzung (Citronensäure/Zuckergemisch) in den unteren Teil des Pakets abgefüllt, dann wurde der Rest mit der o.g. Geliermittel-Basismischung in den gekennzeichneten oberen Teil des Pakets eingefüllt.

## Ausführungsbeispiel 1

Geliermittelzusammensetzung für 1:1-Konfitüre

500 g der nachfolgend beschriebenen Geliermittelzusammensetzung (Gelierzucker) ergaben mit 500 g Früchten (Erdbeeren) ca. 940 g Konfitüre, das heißt ca. 38 Portionen à 25 g, was der normalen Portionsgröße im Hotel- und Gaststättengewerbe entspricht. Da pro Portion Konfitüre mindestens 2 g Inulin enthalten sein sollten, mussten im Gelierzuckergemisch mindestens 76 g Inulin pro 500 g Gelierzucker zugesetzt werden.

Die Zusammensetzung (500 g Geliermittelzusammensetzung) war also wie folgt:

| | |
|---|---|
| 407,0 g | Zucker |
| 76,0 g | Inulin |
| 7,5 g | Citronensäure |
| 4,4 g | Magnesiumcarbonat |
| 3,8 g | Pektin |
| 1,3 g | Vitamin E |
| 500,0 g | |

## Ausführungsbeispiel 2

Konfitüre aus Erdbeeren

1 kg Erdbeeren aus verschiedenen Ansätzen, sowohl reife, gesunde, frische als auch aufgetaute tiefgefrorene Erdbeeren wurden (wenn nötig) gesäubert. Diese wurden dann zerkleinert, in einen großen Topf (5 l [1 = Liter]) gegeben und auf einer Kochplatte (ca. 1,8 kW) bei voller Leistung erhitzt. Nach Kochbeginn wurde unter ständigem Erhitzen -die Masse wurde während des Erhitzens immer intensiv gerührt- der ganzen Masse unter weiterem Rühren 3 min weiter gekocht, wodurch man das Wasser verdampfen ließ. Anschließend wurden, nachdem der Topf von der Heizplatte genommen worden war, ca. 2/3 des Inhalts der Packung gemäß Herstellungsbeispiel mit der inhomogen verteilten Geliermittelzusammensetzung in die kochende Fruchtmasse unter ständigem etwa 1-minütigem intensivem Rühren mit einer geeigneten Rührvorrichtung (Tellerbesen, Spitzlochlöffel) eingerührt, damit der Packungsinhalt und dadurch die Feststoffe in der Geliermittelzusammensetzung (Pektin, Inulin, Magnesiumcarbonat) in kurzer Zeit in Lösung gingen und damit insbesondere das Pektin und das Inulin optimal verteilt wurden. Der Kochtopf wurde danach wieder auf die Platte zurückgestellt. Nach 30 Sekunden wurde der restliche (untere) Paketinhalt, der die Hauptmasse der Citronensäure enthielt, in die Masse eingerührt. Nach weiteren 30 Sekunden wurde der Kochtopf von der Heizplatte genommen und die Konfitüre sofort in heiß ausgespülte Gläser randvoll eingefüllt; mit Schraubverschlüssen wurden die Gläser verschlossen und ca. 2 min zum Zwecke der Sterilisation des Deckels auf denselben umgedreht gestellt. Von Kochbeginn der Fruchtmasse bis zum Abfüllen der Konfitüre in Gläser verging etwa eine Zeit von 5 min.

Zur Schonung der wertvollen Inhaltsstoffe wurde die Konfitüre möglichst kühl (Kühlschrank oder Gefrierschrank) aufbewahrt und/oder bald verzehrt.

## Ausführungsbeispiel 3

Geliermittelzusammensetzung für 2:1-Konfitüre

Mit 500 g einer Geliermittelzusammensetzung gemäß Herstellungsbeispiel wurden entsprechend der in Ausführungsbeispiel 2 angegebenen Vorgehensweise aus 1000 g Früchten (Erdbeeren) eine Konfitüre hergestellt, wobei die Vorgehensweise dahin gehend abgeändert wurde, dass 110 g Inulin je 500 g Geliermittelzusammensetzung -entsprechend dem Herstellungsbeispiel- zugesetzt wurden, um pro Portion der im Hotel- und Gaststättengewerbe üblichen Portionen à 25 g eine Konzentration von 2 g Inulin zu erhalten. Es ergaben sich ca. 1380 g Konfitüre, das heißt ca. 55 Portionen.

Die Trockensubstanz der hergestellten 2:1-Konfitüre (Erdbeer) betrug ca. 44°Bx. Dabei entspricht 1°Bx 1 % gelöster Saccharose (in wässriger Lösung, refraktometrisch gemessen; näherungsweise gilt diese Beziehung auch für andere Saccharide).

Die Zusammensetzung (500 g Geliermittelzusammensetzung) war wie folgt:

| | |
|---|---|
| 365,5 g | Zucker |
| 110,0 g | Inulin |
| 11,1 g | Citronensäure |
| 3,3 g | Magnesiumcarbonat |
| 8,0 g | Pektin |
| 1,5 g | Vitamin E |
| 0,6 g | Sorbinsäure |
| 500,0 g | |

## Ausführungsbeispiel 4

Geliermittelzusammensetzung für 2:1-Konfitüre

Ausführungsbeispiel 3 wurde wiederholt, außer dass an Stelle von Vitamin E fettbeschichtete Citronensäure verwendet wurde. Die Zusammensetzung (500 g Geliermittelzusammensetzung) war wie folgt:

| | |
|---|---|
| 365,9 g | Zucker |
| 110,0 g | Inulin |
| 12,2 g | Citronensäure (fettbeschichtet) |
| 3,3 g | Magnesiumcarbonat |
| 8,0 g | Pektin |
| 0,6 g | Sorbinsäure |
| 500,0 g | |

## Ausführungsbeispiel 5

Geliermittelzusammensetzung für 2:1-Konfitüre

Ausführungsbeispiel 3 wurde wiederholt, außer dass an Stelle von Vitamin E fettbeschichtete Citronensäure und an Stelle von Magnesiumcarbonat tri-Natriumcitrat-Dihydrat verwendet wurden. Die Zusammensetzung des Geliermittels war wie folgt:

| | |
|---|---|
| 373,8 g | Zucker |
| 110,0 g | Inulin |
| 4,0 g | Citronensäure (fettbeschichtet) |
| 3,6 g | tri-Natriumcitrat-Dihydrat |
| 8,0 g | Pektin |
| 0,6 g | Sorbinsäure |
| 500,0 g | |

Durch die Verwendung eines Citratsalzes wird im Gegensatz zur Verwendung des Magnesiumcarbonates weniger Citronensäure gebraucht.

## Ausführungsbeispiel 6

Geliermittelzusammensetzung für 2:1-Konfitüre

Ausführungsbeispiel 3 wurde wiederholt, außer dass an Stelle von Vitamin E ω-3-Fettsäuren verwendet wurden.

Die Zusammensetzung (500 g Geliermittelzusammensetzung) war wie folgt:

| | |
|---|---|
| 364,0 g | Zucker |
| 110,0 g | Inulin |
| 11,1 g | Citronensäure |
| 3,3 g | Magnesiumcarbonat |
| 8,0 g | Pektin |
| 3,0 g | $\omega$-3-Fettsäuren |
| 0,6 g | Sorbinsäure |
| 500,0 g | |

## Ausführungsbeispiel 7

Geliermittelzusammensetzung für 3:1-Konfitüre

500 g der nachfolgend wiedergegebenen Geliermittelzusammensetzung mit 2 g Inulin pro Portion à 25 g ergaben mit 1500 g Früchten (Erdbeeren) ca. 1860 g Konfitüre, das heißt ca. 75 Portionen. Die Trockensubstanz der 3:1-Konfitüre (Erdbeer) betrug ca. 36°Bx .

Die Zusammensetzung der 500 g Geliermittelzusammensetzung war wie folgt:

| | |
|---|---|
| 321,9 g | Zucker |
| 150,0 g | Inulin |
| 11,1 g | Citronensäure |
| 3,3 g | Magnesiumcarbonat |
| 11, 6 g | Pektin |
| 1,5 g | Vitamin E |
| 0,6 g | Sorbinsäure |
| 500,0 g | |

## Ausführungsbeispiel 8

Geliermittelzusammensetzung mit Magnesiumsalzen und besonders häufig verwendete Frucht (Erdbeere) beziehungsweise besonders säurereiche Frucht (rote Johannisbeere)

Mit folgender Geliermittelzusammensetzung, die das Puffersystem aus Citronensäure und Magnesiumcitrat (entstehend aus Magnesiumcarbonat und Citronensäure) enthält, wurden Erdbeer- und Johannisbeerenkonfitüren hergestellt:

| | |
|---|---|
| 366,42 g | Zucker |
| 110,00 g | Inulin |
| 8,00 g | Pektin |
| 11,70 g | Citronensäure (5 % fettbeschichtet) |
| 3,25 g | Magnesiumcarbonat |
| 0,63 g | Sorbinsäure |

Es wurden jeweils 1 kg Erdbeeren beziehungsweise Johannisbeeren (entstielt, entblättert) eingesetzt. Die Kochzeiten betrugen insgesamt je 5 min, davon 3 min nur für das Erhitzen des Fruchtmuses.

## Ergebnis:

|  | TS-Gehalt (in °Bx) | pH-Wert | HPE | SBZ |
|---|---|---|---|---|
| Erdbeerkonfitüre | 44,0 | 3,4 | 228 | 3 |
| Johannisbeerkonfitüre | 45,9 | 3,1 | 501 | 4 |

SBZ: "Siebenstufige sensorische Bewertungszahl" für die Konsistenz einer Konfitüre gemäß folgender Bewertung: 1="zu weich"; ...;4="optimal";...; 7="zu fest".
TS-Gehalt: Gehalt an Trockensubstanz
HPE: "Herbstreith-Pektinometer-Einheit" Maßeinheit für die Bruchfestigkeit, gemessen mit speziellen Ausziehkörpern; 1 HPE entspricht etwa 10 N

**Vergleichsbeispiel**

Geliermittelmischung ohne Magnesiumsalze (Pufferwirkung); besonders häufig verwendete Frucht (Erdbeere) und besonders säurereiche Frucht (rote Johannisbeere)

Mit folgender Geliermittelmischung wurden Erdbeer- und Johannisbeerenkonfitüren hergestellt:

| 377,37 g | Zucker |
|---|---|
| 110,00 g | Inulin |
| 8,00 g | Pektin |
| 4,00 g | Citronensäure (5 % fettbeschichtet) |
| 0,63 g | Sorbinsäure |

Dazu wurden jeweils 1 kg Erdbeeren beziehungsweise Johannisbeeren (entstielt, entblättert) eingesetzt. Die Kochzeiten betrugen insgesamt je 5 min, davon 3 min nur Erhitzen des Fruchtmuses.

**Ergebnis:**

|  | TS-Gehalt (in °Bx) | pH-Wert | HPE | SBZ |
|---|---|---|---|---|
| Erdbeerkonfitüre | 44,4 | 3,2 | 687 | 4 |
| Johannisbeerkonfitüre | 45,6 | 2,9 | 118 | 1 |

SBZ: "Siebenstufige sensorische Bewertungszahl" für die Konsistenz einer Konfitüre gemäß folgender Bewertung: 1="zu weich"; ...;4="optimal";...; 7="zu fest".
TS-Gehalt: Gehalt an Trockensubstanz
HPE: "Herbstreith-Pektinometer-Einheit" Maßeinheit für die Bruchfestigkeit, gemessen mit speziellen Ausziehkörpern; 1 HPE entspricht etwa 10 N

**Auswertung:**

Die Konfitüren gemäß Ausführungsbeispiel 8 waren in Bezug auf die Konsistenz (Gelierung) optimal, die pH-Werte waren um ca. 0,2 pH-Einheiten höher im Vergleich zu den Konfitüren des Vergleichsbeispiels ohne Puffersystem. Deshalb hat der Kochprozess und die Lagerung der Konfitüren einen wesentlich geringeren, negativen Einfluss auf die Lagerstabilität des empfindlichen Inulins. Das erfindungsgemäße Puffersystem, insbesondere mit den Mg-Ionen, schützt außerdem auch das Inulin vor den großen fruchteigenen Säuremengen der Johannisbeeren. Neben der Pufferfunktion des Magnesiumsalzes ist der ernährungsphysiologische Aspekt der Mg-Ionen hervorzuheben.

In den Fig. 1 und 2 sind zusätzlich Temperaturverlaufskurven für eine "normale" Konfitürenkochung (Fig. 2 "alles zusammen kochen") und einer erfindungsgemäßen Kochung (Fig. 1) gegenübergestellt. Man sieht deutlich die unterschiedlichen Temperaturbelastungen (Dauer und Temperatur >90°C sind gekennzeichnet).

Die Erdbeer- beziehungsweise die Johannisbeerkonfitüre ohne ein erfindungsgemäßes Puffersystem zeigte sehr tiefe pH-Werte, wobei besonders derjenige der Johannisbeerkonfitüre äußerst schädlich war für die Stabilität des Inulins. Außerdem zeigte der HPE-Wert und der Wert für die sensorische Bewertungszahl [SBZ] der Johannisbeerkonfitüre, dass die Konsistenz dieser Konfitüre sehr schlecht war, das heißt, die Gelierung erfolgte nicht in ausreichendem Maße, die Masse war fast flüssig.


**Patentansprüche**

1. Geliermittelzusammensetzung, enthaltend mindestens ein Süßungsmittel und Säure sowie Pektin als Geliermittel, **dadurch gekennzeichnet, dass** mindestens ein weiterer Stoff, ausgewählt aus der Gruppe bestehend aus Pektinhydrolyseprodukten, Inulo-Oligosacchariden und Inulo-Polysacchariden, als Ballaststoff, Präbiotikum und/oder Resorptionshilfsstoff enthalten ist, und dass zumindest Pektin als Feststoff vorliegt.

2. Geliermittelzusammensetzung nach Anspruch 1, **dadurch gekennzeichnet, dass** der Ballaststoff in einer Menge von 1 g bis 150 g je 500 g der Geliermittelzusammensetzung enthalten ist.

3. Geliermittelzüsammensetzung nach Anspruch 1 oder 2, **dadurch gekennzeichnet, dass** das Präbiotikum in einer Menge von 1 g bis 200 g je 500 g der Geliermittelzusammensetzung enthalten ist.

4. Geliermittelzusammensetzung nach einem der Ansprüche 1 bis 3, **dadurch gekennzeichnet, dass** der Resorptionshilfsstoff in einer Menge von 1 g bis 200 g je 500 g der Geliermittelzusammensetzung enthalten ist.

5. Geliermittelzusammensetzung nach Anspruch 4, **dadurch gekennzeichnet, dass** der ResorptionshilfsStoff, ein Resorptionshilfsstoff für Calcium- und/oder Magnesiumionen ist.

6. Geliermittelzusammensetzung, nach einem der vorhergehenden Ansprüche, **dadurch gekennzeichnet, dass** das Süßungsmittel Zucker, insbesondere Saccharose, Glucose, Glucosesirup, Fructose, Sorbit und/oder mindestens ein Zuckeraustauschstoff, insbesondere Isomalt ist.

7. Geliermittelzusammensetzung nach einem der vorhergehenden Ansprüche, **dadurch gekennzeichnet, dass** das Geliermittel in einer Menge von 1 g bis 50 g je 500 g der Geliermittelzusammensetzung enthalten ist.

8. Geliermittelzusammensetzung nach einem der vorhergehenden Ansprüche, **dadurch gekennzeichnet, dass** das Inulo-Oligosaccharid und/oder Inulo- Polysaccharid Oligofructose oder Inulin ist und/oder in einer Menge von 15 bis 150 g je 500 g der Zusammensetzung enthalten ist.

9. Geliermittelzusammensetzung nach einem der vorhergehenden Ansprüche, **dadurch gekennzeichnet, dass** zusätzlich Magnesiumsalze, insbesondere Magnesiumcarbonat, bevorzugt in einer Menge von 1 g bis 10 g je 500 g der Zusammensetzung, enthalten sind.

10. Geliermittelzusammensetzung nach einem der vorhergehenden Ansprüche, **dadurch gekennzeichnet, dass** zusätzlich Natriumcitrat, insbesondere tri-Natriumcitrat-Dihydrat, bevorzugt in einer Menge von 1 g bis 10 g in je 500 g der Zusammensetzung, enthalten ist.

11. Geliermittelzusammensetzung nach einem der vorhergehenden Ansprüche, **dadurch gekennzeichnet, dass** als Säure Citronensäure, bevorzugt in einer Menge von 1 g bis 50 g je 500 g der Zusammensetzung, enthalten ist.

12. Geliermittelzusammensetzung nach einem der vorhergehenden Ansprüche, **dadurch gekennzeichnet, dass** zusätzlich mindestens eine lipophile Substanz, Vitamin, sekündärer Pflanzeninhaltsstoff, Immunstimulans, Konservierungsstoff und/oder Gefäßprophylaktikum enthalten ist.

13. Geliermittelzusammensetzung nach Anspruch 12, **dadurch gekennzeichnet, dass** der Konservierungsstoff Sorbinsäure ist.

14. Geliermittelzusammensetzung nach Anspruch 12 oder 13, **dadurch gekennzeichnet, dass** die lipophile Substanz Vitamin E, L-Carnitin und Acetyl-L-Carnitin und/oder einem Salz dieser beiden und/oder mindestens eine ω-3-Fettsäure ist.

15. Geliermittelzusammensetzung nach Anspruch 14, **dadurch gekennzeichnet, dass** die mindestens eine ω-3-Fettsäure Eicosapentaensäure und/oder Docosahexaensäure ist.

16. Verwendung der Geliermittelzusammensetzung nach einem der Ansprüche 1 bis 15 zur Herstellung einer Zubereitung, insbesondere zur Herstellung von Konfitüre.

17. Verwendung von Inulin und/oder Oligofructose in einer Geliermittelzusammensetzung nach einem der Ansprüche 1 bis 15 als Resorptionshilfsstoff, Präbiotikum und/oder Ballaststoff.

18. Verwendung von ω-3-Fettsäuren und/oder Vitamin E in einer Geliermittelzusammensetzung nach einem der Ansprüche 1 bis 15 als schaumverhinderndes Mittel.

19. Zubereitung, enthaltend die Geliermittelzusammensetzung nach einem der Ansprüche 1 bis 15, wobei die Zubereitung eine Konfitüre, ein Brotaufstrich oder eine Fruchtsoße ist.

20. Zubereitung nach Anspruch 19, **dadurch gekennzeichnet, dass** die Geliermittelzusammensetzung in einem Mischungsverhältnis von, bezogen auf das Gewicht, (Geliermittelzusammensetzung):(Bestandteil, ausgewählt aus Früchten, Fruchtauszügen und Fruchtsäften) im Bereich von 1:0,5 bis 1:5 enthalten ist.

21. Zubereitung nach Anspruch 19, **dadurch gekennzeichnet, dass** die Geliermittelzusammensetzung in einem Mischungsverhältnis von, bezogen auf das Gewicht, (Geliermittelzusammensetzung):(Bestandteil, ausgewählt aus Früchten, Fruchtauszügen und Fruchtsäften) im Bereich von 1:1,5 bis 1:2,5 enthalten ist.

22. Verfahren zur Herstellung der Zubereitung nach einem der Ansprüche 19 bis 21, wobei das Verfahren die Schritte umfasst, dass die Geliermittelzusammensetzung einem Bestandteil, ausgewählt aus Früchten, Fruchtauszügen und Fruchtsäften, so zugegeben wird, dass

- in einem ersten Schritt mindestens die Hälfte, bevorzugt mindestens 90 Gew.-%, des in der Geliermittelzusammensetzung insgesamt vorhandenen Geliermittels zusammen mit jeweils der Hälfte der übrigen Bestandteile der Geliermittelzusammensetzung, die Säure ausgenommen, hinzugefügt und dass
- in einem zweiten Schritt der Rest der Geliermittelzusammensetzung mit mindestens der Hälfte, bevorzugt mit mindestens 90 Gew.-%, der insgesamt in der Geliermittelzusammensetzung vorhandenen Säure und mit der jeweils anderen Hälfte der übrigen Bestandteile der Geliermittelzusammensetzung, das Geliermittel ausgenommen, hinzugefügt wird.

23. Vorrichtung, insbesondere Packung, zur Durchführung des Verfahrens nach Anspruch 22, enthaltend die Geliermittelzusammensetzung nach einem der Ansprüche 1 bis 15 in nicht-homogener Verteilung.

24. Vorrichtung nach Anspruch 23, wobei die nicht homogene Verteilung so ausgestaltet wird, dass bei der Verwendung der Vorrichtung

- in einem ersten Schritt mindestens die Hälfte, bevorzugt mindestens 90 Gew.-%, des in der Geliermittelzusammensetzung insgesamt vorhandenen Geliermittels zusammen mit jeweils der Hälfte der übrigen Bestandteile der Geliermittelzusammensetzung, die Säure ausgenommen, hinzugefügt und dass
- in einem zweiten und/oder weiteren Schritten der Rest der Geliermittelzusammensetzung mit mindestens der Hälfte, bevorzugt mit mindestens 90 Gew.-%, der insgesamt in der Geliermittelzusammensetzung vorhandenen Säure und mit der jeweils anderen Hälfte der übrigen Bestandteile der Geliermittelzusammensetzung, das Geliermittel ausgenommen, hinzugefügt wird.

25. Vorrichtung nach Anspruch 23 oder 24, wobei die nicht-homogene Verteilung der Geliermittelzusammensetzung durch eine gradientenmäßige Befüllung der Vorrichtung bei der Herstellung erzielt wird.

26. Vorrichtung nach Anspruch 23 oder 24, wobei die nicht-homogene Verteilung der Geliermittelzusammensetzung durch Aufteilung der in die Vorrichtung zu füllenden Geliermittelzusammensetzung auf mindestens zwei Kompartimente erzielt wird.

**Claims**

1. Gelling agent composition containing at least one sweetening agent and acid as well as pectin as gelling agent, **characterised in that** at least one further substance selected from the group consisting of pectin hydrolysis products, inulo-oligosaccharides and inulo-polysaccharides is contained therein as dietary fibre, prebiotic and/or resorption aid and that at least pectin is present as a solid.

2. Gelling agent composition according to claim 1 **characterised in that** the dietary fibre is contained therein in a quantity of 1 g to 150 g per 500 g of the gelling agent composition.

3. Gelling agent composition according to claim 1 or 2 **characterised in that** the prebiotic is contained therein in a quantity of 1 g to 200 g per 500 g of the gelling agent composition.

4. Gelling agent composition according to one of claims 1 to 3 **characterised in that** the resorption aid is contained therein in a quantity of 1 g to 200 g per 500 g of the gelling agent composition.

5. Gelling agent composition according to claim 4 **characterised in that** the resorption aid is a resorption aid for calcium ions and/or magnesium ions.

6. Gelling agent composition according to one of the preceding claims **characterised in that** the sweetening agent is sugar, in particular sucrose, glucose, glucose syrup, fructose, sorbitol and/or at least one sugar substitute, in particular isomalt.

7. Gelling agent composition according to one of the preceding claims **characterised in that** the gelling agent is contained therein in a quantity of 1 g to 50 g per 500 g of the gelling agent composition.

8. Gelling agent composition according to one of the preceding claims **characterised in that** the inulo-oligosaccharide and/or inulo-polysaccharide is oligofructose or inulin and/or is contained therein in a quantity of 15 to 150 g per 500 g of the composition.

9. Gelling agent composition according to one of the preceding claims **characterised in that,** additionally, magnesium salts, in particular magnesium carbonate, are contained therein, preferably in a quantity of 1 g to 10 g per 500 g of the composition.

10. Gelling agent composition according to one of the preceding claims **characterised in that**, additionally, sodium citrate, in particular trisodium citrate dihydrate, is contained therein, preferably in a quantity of 1 g to 10 g per 500 g of the composition.

11. Gelling agent composition according to one of the preceding claims **characterised in that** citric acid is contained therein as acid, preferably in a quantity of 1 g to 50 g per 500 g of the composition.

12. Gelling agent composition according to one of the preceding claims **characterised in that**, additionally, at least one lipophilic substance, vitamin, secondary plant constituent, immunostimulant, preservative and/or vascular prophylactic is contained therein.

13. Gelling agent composition according to claim 12 **characterised in that** the preservative is sorbic acid.

14. Gelling agent composition according to claim 12 or 13 **characterised in that** the lipophilic substance is vitamin E, L-carnitine and acetyl-L-carnitine and/or a salt of the two and/or at least one $\omega$-3 fatty acid.

15. Gelling agent composition according to claim 14 **characterised in that** the at least one $\omega$-3 fatty acid is eicosapentanoic acid and/or docosahexanoic acid.

16. Use of the gelling agent composition according to one of claims 1 to 15 for the production of a preparation, in particular for the production of jam.

17. Use of inulin and/or oligofructose in a gelling agent composition according to one of claims 1 to 15 as resorption aid, prebiotic and/or dietary fibre.

**18.** Use of $\omega$-3 fatty acids and/or vitamin E in a gelling agent composition according to one of claims 1 to 15 as antifoaming agent.

**19.** Preparation containing the gelling agent composition according to one of claims 1 to 15, wherein the preparation is a jam, a spread for bread or a fruit sauce.

**20.** Preparation according to claim 19 **characterised in that** the gelling agent composition is contained therein in a mixing ratio, based on the weight, of (gelling agent composition) : (component selected from fruit, fruit extracts and fruit juices) in the range of 1 : 0.5 to 1 : 5.

**21.** Preparation according to claim 19 **characterised in that** the gelling agent composition is contained therein in a mixing ratio, based on the weight, of (gelling agent composition) : (component selected from fruit, fruit extracts and fruit juices) in the range of 1 : 1.5 to 1 : 2.5.

**22.** Process for the production of the preparation according to one of claims 19 to 21, wherein the process comprises the steps of the gelling agent composition being added to a component selected from fruit, fruit extracts and fruit juices such that

- in a first step, at least half, preferably at least 90 % by wt., of the gelling agent present in the gelling agent composition as a whole are added together with half of the remaining components of the gelling agent composition, with the exception of the acid, and that
- in a second step, the remainder of the gelling agent composition is added together with at least half, preferably at least 90 % by wt., of the acid present in the gelling agent composition as a whole and with the other half of the remaining components of the gelling agent composition, with the exception of the gelling agent.

**23.** Device, in particular packaging, for carrying out the process according to claims 22, containing the gelling agent composition according to one of claims 1 to 15 in a non-homogeneous distribution.

**24.** Device according to claim 23, wherein the non-homogeneous distribution is such that, when using the device

- in a first step, at least half, preferably at least 90 % by wt., of the gelling agent present in the gelling agent composition as a whole are added together with half of the remaining components of the gelling agent composition, with the exception of the acid, and that
- in a second and/or further steps, the remainder of the gelling agent composition is added together with at least half, preferably at least 90 % by wt., of the acid present in the gelling agent composition as a whole and with the other half of the remaining components of the gelling agent composition, with the exception of the gelling agent.

**25.** Device according to claim 23 or 24, wherein the non-homogeneous distribution of the gelling agent composition is achieved by gradient-type filling of the device during production.

**26.** Device according to claim 23 or 24, wherein the non-homogeneous distribution of the gelling agent composition is achieved by dividing the gelling agent composition to be introduced into the device over at least two compartments.

**Revendications**

**1.** Composition de gélifiant, contenant au moins un édulcorant et un acide ainsi que de la pectine comme gélifiant, **caractérisée en ce qu'**au moins une autre substance, sélectionnée dans le groupe constitué des produits d'hydrolyse de la pectine, d'inulo-oligosaccharides et d'inulo-polysaccharides, est contenue comme fibre alimentaire, de prébiotique et/ou d'auxiliaire de résorption, et qu'au moins de la pectine est présente comme solide.

**2.** Composition de gélifiant selon la revendication 1, **caractérisée en ce que** la fibre alimentaire est contenue en une quantité de 1 g à 150 g par 500 g de la composition de gélifiant.

**3.** Composition de gélifiant selon la revendication 1 ou 2, **caractérisée en ce que** le prébiotique est contenu en une quantité de 1 g à 200 g par 500 g de la composition de gélifiant.

**4.** Composition de gélifiant selon l'une des revendications 1 à 3, **caractérisée en ce que** l'auxiliaire de résorption est contenu en une quantité de 1 g à 200 g par 500 g de la composition de gélifiant.

**5.** Composition de gélifiant selon la revendication 4, **caractérisée en ce que** l'auxiliaire de résorption est un auxiliaire de résorption pour des ions calcium et/ou magnésium.

**6.** Composition de gélifiant selon l'une des revendications précédentes, **caractérisée en ce que** l'édulcorant est un sucre, notamment du saccharose, du glucose, du sirop de glucose, du fructose, du sorbitol et/ou au moins un produit de substitution du sucre, notamment de l'isomalt.

**7.** Composition de gélifiant selon l'une des revendications précédentes, **caractérisée en ce que** le gélifiant est contenu en une quantité de 1 g à 50 g par 500 g de la composition de gélifiant.

**8.** Composition de gélifiant selon l'une des revendications précédentes, **caractérisée en ce que** l'inulo-oligosaccharide et/ou l'inulo-polysaccharide est de l'oligofructose ou de l'inuline et/ou est contenu en une quantité de 15 à 150 g par 500 g de la composition.

**9.** Composition de gélifiant selon l'une des revendications précédentes, **caractérisée en ce que** des sels de magnésium, notamment du carbonate de magnésium, sont contenus en outre de préférence en une quantité de 1 g à 10 g par 500 g de la composition.

**10.** Composition de gélifiant selon l'une des revendications précédentes, **caractérisée en ce que** du citrate de sodium, notamment du dihydrate de citrate trisodique, est contenu en outre de préférence en une quantité de 1 g à 10 g par 500 g de la composition.

**11.** Composition de gélifiant selon l'une des revendications précédentes, **caractérisée en ce que** de l'acide citrique, de préférence en une quantité de 1 g à 50 g par 500 g de la composition, est contenu comme acide.

**12.** Composition de gélifiant selon l'une des revendications précédentes, **caractérisée en ce qu'**au moins une substance lipophile, une vitamine, un ingrédient végétal secondaire, un agent immunostimulant, un conservateur et/ou un agent prophylactique de la vascularisation est contenu en outre.

**13.** Composition de gélifiant selon la revendication 12, **caractérisée en ce que** le conservateur est de l'acide sorbique.

**14.** Composition de gélifiant selon la revendication 12 ou 13, **caractérisée en ce que** la substance lipophile est de la vitamine E, de la L-carnitine et de l'acétyl-L-carnitine et/ou un sel de ces deux substances et/ou au moins un acide gras ω-3.

**15.** Composition de gélifiant selon la revendication 14, **caractérisée en ce que** ledit au moins un acide gras ω-3 est l'acide eicosapentanoïque et/ou l'acide docosahexanoïque.

**16.** Utilisation de la composition de gélifiant selon l'une des revendications 1 à 15 en vue de la production d'une préparation, notamment en vue de la production de confiture.

**17.** Utilisation d'inuline et/ou d'oligofructose dans une composition de gélifiant selon l'une des revendications 1 à 15 comme auxiliaire de résorption, prébiotique et/ou fibre alimentaire.

**18.** Utilisation d'acides gras ω-3 et/ou de vitamine E dans une composition de gélifiant selon l'une des revendications 1 à 15 comme agent empêchant la formation d'écume.

**19.** Préparation contenant la composition de gélifiant selon l'une des revendications 1 à 15, la préparation étant une confiture, une pâte à tartiner ou une sauce aux fruits.

**20.** Préparation selon la revendication 19, **caractérisée en ce que** la composition de gélifiant est contenue dans un rapport de mélange, par rapport au poids, (composition de gélifiant)/(constituant, sélectionné parmi des fruits, des extraits de fruits et des jus de fruits) dans la gamme allant de 1/0,5 à 1/5.

**21.** Préparation selon la revendication 19, **caractérisée en ce que** la composition de gélifiant est contenue dans un rapport de mélange, par rapport au poids, (composition de gélifiant)/(constituant, sélectionné parmi des fruits, des extraits de fruits et des jus de fruits) dans la gamme allant de 1/1,5 à 1/2,5.

22. Procédé de production de la préparation selon l'une des revendications 19 à 21, le procédé comprenant les étapes selon lesquelles la composition de gélifiant est ajoutée à un constituant, sélectionné parmi des fruits, des extraits de fruits et des jus de fruits de sorte que

- dans une première étape, au moins la moitié, de préférence au moins 90 % en poids, du gélifiant présent au total dans la composition de gélifiant avec, à chaque fois, la moitié des constituants restants de la composition de gélifiant, mis à part l'acide, est ajoutée et que
- dans une seconde étape, le reste de la composition de gélifiant avec au moins la moitié, de préférence avec au moins 90 % en poids, de l'acide présent au total dans la composition de gélifiant et avec l'autre moitié respective des constituants restants de la composition de gélifiant, mis à part le gélifiant, est ajouté.

23. Dispositif, notamment paquet, en vue de la réalisation du procédé selon la revendication 22, contenant la composition de gélifiant selon l'une des revendications 1 à 15 suivant une distribution non homogène.

24. Dispositif selon la revendication 23, la distribution non homogène étant configurée de sorte que, lors de l'utilisation du dispositif,

- dans une première étape, au moins la moitié, de préférence au moins 90 % en poids, du gélifiant présent au total dans la composition de gélifiant avec, à chaque fois, la moitié des constituants restants de la composition de gélifiant, mis à part l'acide, est ajoutée et que
- dans une seconde étape et/ou dans des étapes supplémentaires, le reste de la composition de gélifiant avec au moins la moitié, de préférence avec au moins 90 % en poids, de l'acide présent au total dans la composition de gélifiant et avec l'autre moitié respective des constituants restants de la composition de gélifiant, mis à part le gélifiant, est ajouté.

25. Dispositif selon la revendication 23 ou 24, la distribution non homogène de la composition de gélifiant étant obtenue par un remplissage par gradient du dispositif lors de la production.

26. Dispositif selon la revendication 23 ou 24, la distribution non homogène de la composition de gélifiant étant obtenue par répartition de la composition de gélifiant à verser dans le dispositif sur au moins deux compartiments.

Fig.1

Temperaturverlauf bei der Konfitüren – Kochung

modifizierte Kochung

Topf von Heizplatte, Zugabe Geliermittelzusammensetzung gemäß Erfindung

Thermische Belastung des Inulins

Abfüllen

Topf auf Heizplatte zurück

Kochbeginn

Temperatur [°C]

Zeit [min]

Temperaturverlauf bei der Konfitüren - Kochung
konventionelle Kochung

Fig.2

Kochbeginn

Abfüllen

Thermische Belastung des Inulins

Temperatur [°C]

Zeit [min]

EP 1 414 312 B1